# EUROPEAN PATENT APPLICATION

(11) **EP 1 598 100 A1**
(43) Date of publication of application: **23.11.2005**
(21) Application number: 04252128.6
(22) Date of filing: 08.04.2004
(51) Int. Cl.: B01D 25/26

(54) **Laminated modular water filter**

(71) Applicant: Kintech Technology Co., Ltd, Taichung City (TW)
(72) Inventor: Kuo, Joseph, Taichung City Tawain (CN)
(74) Representative: Molyneaux, Martyn William

(57) **Abstract**

A laminated modular water filter includes a plurality of superposed support units (1) disposed between top and bottom covers (3, 4). Each adjacent pair of the top cover (3), the support units (1), and the bottom cover (4) define a filter-receiving space (6) for receiving a filter unit (5) therein. Each of the support units (1) is comprised of annular inner and outer supporting members (11, 12) that confine a stirring member (2) therebetween. Each of the stirring members (2) has an inner ring (21), an outer ring (23), and a plurality of ribs (24) interconnecting the inner and outer rings (21, 23).

## Description

This invention relates to a water filter, and more particularly to a laminated modular water filter.

The applicant's copending European patent application number 03255338.0 discloses a laminated modular water filter that includes a plurality of superposed intermediate plates, a top plate, a bottom plate, a plurality of filter units, and a plurality of rotatable nets with projections for removing solid particles from filtering films. Although the laminated modular water filter can achieve its intended purpose, in actual practice, it has the following disadvantages:
(1) The top plate, the intermediate plates, and the bottom plate are solid bodies that increase total weight of the water filter, thereby resulting in difficulties in the assembly and disassembly of the water filter.
(2) Since there is relatively large friction between the rotatable nets and the filtering films, it is difficult to rotate the rotatable nets smoothly relative to the filtering films.
(3) A plurality of seal rings are employed for the purpose of establishing liquid-tight seals. However, flow of water over the seal rings for a long period of time will cause hydrolysis of the same, thereby resulting in leakage of water from the laminated modular water filter.
(4) The top and bottom plates are fastened to each other by bolts. Because the intermediate plates are clamped between the top and bottom plates, the top and bottom plates are apt to deform such that the outer peripheries of the top and bottom plates move toward each other and such that the central portions of the top and bottom plates move away from each other.

An object of this invention is to provide a lightweight laminated modular water filter that can remove solid particles effectively from the filtering films after dirty water is filtered in the laminated modular water filter.

Another object of this invention is to provide a laminated modular water filter that does not provide seal rings.

Still another object of this invention is to provide a laminated modular water filter that includes top and bottom covers which are fastened to each other by bolts and which have specific structures so as to prevent deformation thereof.

According to this invention, a laminated modular water filter includes a plurality of superposed support units, each of which includes an annular inner supporting member and an annular outer supporting member that is disposed around the inner supporting member to define an annular stirrer-receiving space therebetween. Each adjacent pair of the inner supporting members are interconnected such that a liquid-tight seal is established therebetween. Each adjacent pair of the outer supporting members are interconnected such that a liquid-tight seal is established therebetween. Each of the inner supporting members has a central hole, and an outer periphery that is formed with a fixed guide rail unit therealong. Each of the outer supporting members has an inner periphery that is formed with a fixed guide rail unit therealong. The inner supporting members are arranged in a vertical row. The outer supporting members are also arranged in a vertical row.

A plurality of stirring members are connected respectively and rotatably to the superposed support units. Each of the stirring members includes an inner ring defining a central hole therein and rotatable along the guide rail unit of a corresponding one of the inner supporting members, an outer ring disposed around and spaced apart from the inner ring and rotatable along the guide rail unit of a corresponding one of the outer supporting members, and a plurality of ribs, each of which has an inner end formed integrally with the inner ring, and an outer end formed integrally with the outer ring. The central holes in the inner rings are in fluid communication with the central holes in the inner supporting members in the superposed support units.

A top cover is disposed on top surfaces of the inner and outer supporting members of an uppermost one of the superposed support units, is connected removably to the superposed support units, and has a central hole in fluid communication with the central holes in the inner supporting members of the support units, and at least one side hole that is formed through the top cover, that is in fluid communication with the annular stirrer-receiving spaces in the superposed support units, and that permits introduction of dirty water therethrough.

A bottom cover is disposed on bottom surfaces of the inner and outer supporting members of a lowermost one of the superposed support units, is connected removably to the superposed support units, and has a central hole in fluid communication with the central holes in the inner supporting members of the superposed support units, and at least one side hole that is formed through the bottom cover, that is in fluid communication with the annular stirrer-receiving spaces in the superposed support units, and that permits introduction of the dirty water therethrough. Each adjacent pair of the top cover, the superposed support units, and the bottom cover define a filter-receiving space that is formed therebetween and that is in fluid communication with the central holes in the inner supporting members of the superposed support units and the side holes in the top and bottom covers such that the dirty water can flow from the side holes in the top and bottom covers into the central holes in the inner supporting members through the filter-receiving spaces.

A plurality of the filter units are received respectively and fittingly within the filter-receiving spaces so as to filter the dirty water when the dirty water flows through the filter-receiving spaces, thereby permitting filtered water to exit from the laminated modular water filter through the central holes in the top and bottom covers.

Because each of the superposed support units is comprised of one of the inner supporting members and one of the outer supporting members, total weight of the laminated modular water filter is relatively light.

Preferably, each of the guide rail units of the inner and outer supporting members of the superposed support units includes a plurality of alternately arranged L-shaped first and second guiding blocks extending integrally and radially therefrom. Each of the first guiding blocks has a vertical plate portion formed integrally with a corresponding one of the inner and outer supporting members of the superposed support units, and a horizontal plate portion extending integrally and radially from an upper end of the vertical plate portion and having a bottom surface that is formed with an integral projecting grain. Each of the second guiding blocks has a vertical plate portion formed integrally with the corresponding one of the inner and outer supporting members of the superposed support units, and a horizontal plate portion extending integrally and radially from a lower end of the vertical plate portion of a corresponding one of the second guiding blocks and having a top surface that is formed with an integral projecting grain. In each of the guide rails, the vertical plate portions of the first and second guiding blocks are aligned along a circumferential direction of a corresponding one of the guide rail units so as to confine the inner ring of a corresponding one of the stirring members between the projecting grains of the horizontal plate portions of the first and second guiding blocks of a corresponding one of the inner supporting members and so as to confine the outer ring of a corresponding one of the stirring members between the projecting grains of the horizontal plate portions of the first and second guiding blocks of a corresponding one of the outer supporting members.

As such, the stirring members can rotate smoothly within the laminated modular water filter so as to remove solid particles effectively from the filter units.

Preferably, the inner and outer supporting members of one of each adjacent pair of the superposed support units are made of a soft material, and the inner and outer supporting members of the other one of each adjacent pair of the supporting support units are made of a hard material so as to establish a liquid-tight seal between each adjacent pair of the inner supporting members and between each adjacent pair of the outer supporting members. As such, there is no need to provide a seal ring between each adj acent pair of the top cover, the support units, and the bottom cover. In one embodiment, the soft material is polyethylene, and the hard material is propylene-butadiene-styrene co-polymer.

Preferably, the top cover has an upwardly and gradually converging top surface, and an outer peripheral portion that is formed with a plurality of peripheral holes formed therethrough. The bottom cover has a downwardly and gradually converging bottom surface, and an outer peripheral portion that is formed with a plurality of peripheral holes formed therethrough. The laminated modular water filter further includes a plurality of lock bolt and nut units that extend respectively into the peripheral holes in each of the top and bottom covers so as to connect the top and bottom covers removably to the superposed support units. As such, deformation of the top and bottom covers can be prevented.

These and other features and advantages of this invention will become apparent in the following detailed description of a preferred embodiment of this invention, with reference to the accompanying drawings, in which:
Fig. 1 is an assembled perspective view of the preferred embodiment according to this invention;
Fig. 2 is an exploded perspective view of the preferred embodiment;
Fig. 3 is an exploded perspective view of a support unit and a stirring member of the preferred embodiment;
Fig. 4 is a sectional view of the preferred embodiment, illustrating the flow path of water when it is being filtered; and
Fig. 5 is a fragmentary sectional view of two support units, two stirring members, and two filter units of the preferred embodiment.

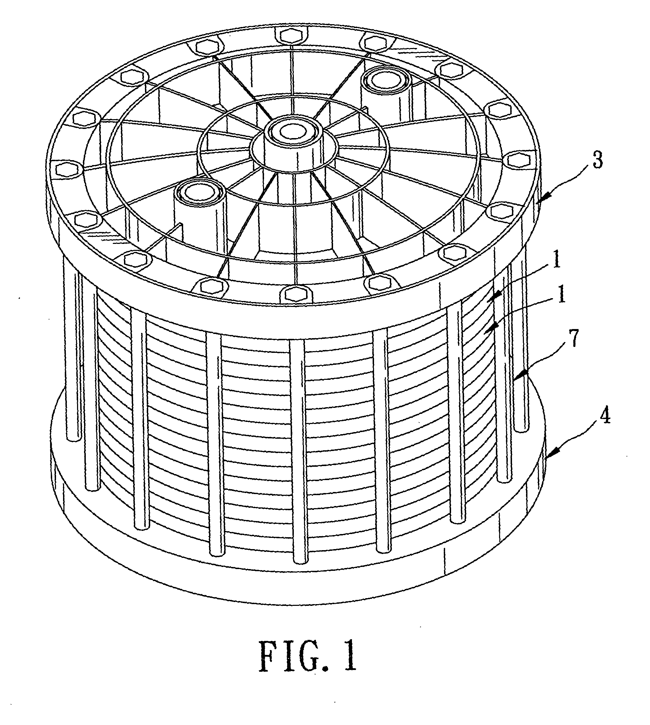

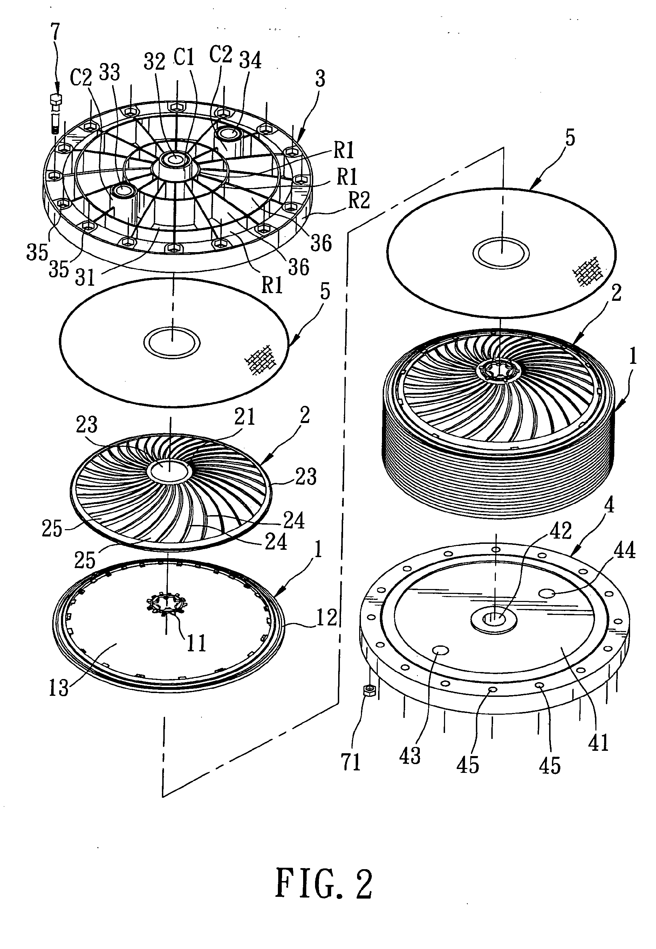

Referring to Figs. 1 and 2, the preferred embodiment of a laminated modular water filter according to this invention is shown to include a plurality of superposed support units 1, a plurality of stirring members 2, a top cover 3, a bottom cover 4, and a plurality of filter units 5.

Referring to Figs. 2, 3, 4, and 5, each of the support units 1 includes an annular inner supporting member 11 and an annular outer supporting member 12 that is disposed around the inner supporting member 11 to define an annular stirrer-receiving space 13 therebetween. In each adjacent pair of the support units 1, one is made of a soft material, such as polyethylene, and the other one is made of a hard material, such as propylene-butadiene-styrene co-polymer. As such, a liquid-tight seal can be established between each adjacent pair of the inner supporting members 11 and between each adjacent pair of the outer supporting members 12.

Each of the inner supporting members 11 has a central hole 111 formed therethrough, a circumferential row of grooves 112 formed in a top side surface, a circumferential row of tongues 113 formed in a bottom side surface, a circumferential row of notches 114 formed in an inner periphery and in fluid communication with the central hole 111, and a guide rail unit consisting of a plurality of alternately arranged L-shaped first and second guiding blocks 115, 115' formed along an outer periphery. Each of the first guiding blocks 115 has a vertical plate portion (116V) formed integrally with the corresponding inner supporting member 11, and a horizontal plate portion (116H) extending integrally, radially, and outwardly from an upper end of the vertical plate portion (116V) of the first guiding block 115 and having a bottom surface that is formed with an integral projecting grain 117. Each of the second guiding blocks 115' has a vertical plate portion (116V) formed integrally with the corresponding inner supporting member 11, and a horizontal plate portion (116H) extending integrally, radially, and outwardly from a lower end of the vertical plate portion (116V) of the second guiding block 115' and having a top surface that is formed with an integral projecting grain 117. In each of the inner supporting members 11, the vertical plate portions (116V) are aligned with one another along a circumferential direction of the inner supporting member 11. In each adjacent pair of the inner supporting members 11, the tongues 113 of the upper inner supporting member 11 engage respectively and fittingly the grooves 112 in the lower inner supporting member 11 so that the inner supporting members 11 are arranged in a vertical row.

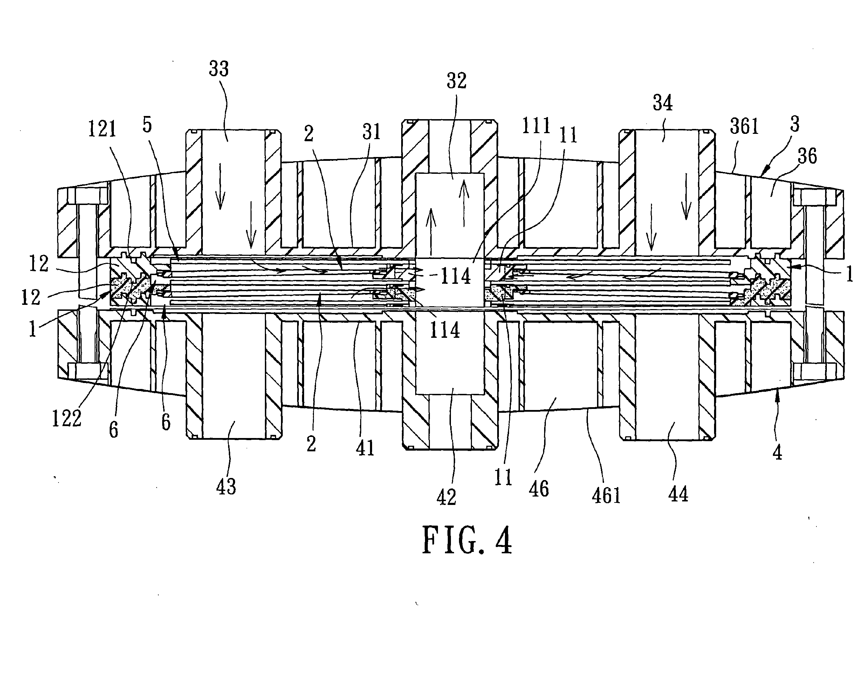

Each of the outer supporting members 12 has an annular groove 121 formed in a top surface, an annular rib 122 (see Fig. 4) formed on a bottom surface, and a guide rail unit consisting of a plurality of alternately arranged L-shaped first and second guiding blocks 123, 123' formed along an inner periphery. Each of the first guiding blocks 123 has a vertical plate portion (124V) formed integrally with the corresponding outer supporting member 12, and a horizontal plate portion (116H) extending integrally, radially, and inwardly from an upper end of the vertical plate portion (124V) of the first guiding block 123 and having a bottom surface that is formed with an integral projecting grain 125. Each of the second guiding blocks 123' has a vertical plate portion (124V) formed integrally with the corresponding outer supporting member 12, and a horizontal plate portion (124H) extending integrally, radially, and inwardly from a lower end of the vertical plate portion (124V) of the second guiding block 123' and having a top surface that is formed with an integral projecting grain 125. In each of the outer supporting members 12, the vertical plate portions (124V) are aligned with one another along a circumferential direction of the outer supporting member 12. In each adjacent pair of the outer supporting members 12, the annular rib 122 of the upper inner supporting member 12 engages fittingly the annular groove 121 in the lower supporting member 12 so that the outer supporting members 12 are also arranged in a vertical row.

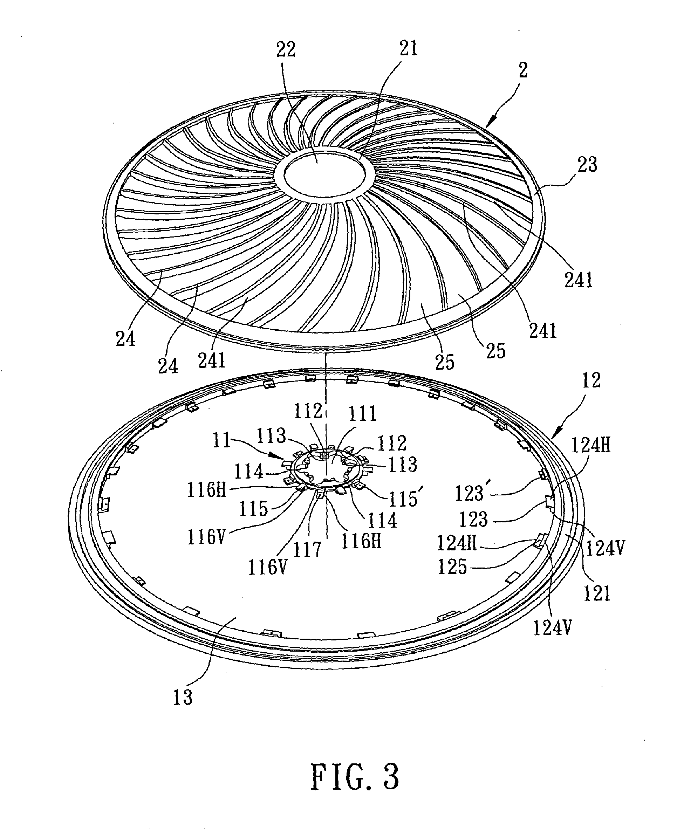

Each of the stirring members 2 is made of polyethylene, and includes an inner ring 21 that defines a central hole 22 therein and that is rotatable between and that contacts the projecting grains 117 of the first and second guiding blocks 115, 115' of the corresponding inner supporting member 11, an outer ring 23 that is disposed around and that is spaced apart from the inner ring 21 and that is rotatable between and that contacts the projecting grains 125 of the first and second guiding blocks 123, 123' of the corresponding outer supporting member 12, and a plurality of curved ribs 24, each of which has an inner end formed integrally with the inner ring 21, an outer end formed integrally with the outer ring 23, and two inclined side surfaces 241 (see Fig. 3) that can increase the stirring effect of the corresponding stirring member 2. As such, each of the stirring members 2 is confined within the stirrer-receiving space 13 of the corresponding support unit 1. The central holes 22 in the inner rings 21 are in fluid communication with the central holes 111 in the inner supporting members 11.

The top cover 3 includes:
a ring plate 31 abutting against the top surfaces of the inner and outer supporting members 11, 12 of the uppermost support unit 1;
a hollow central post (C1) extending integrally and upwardly from a center of the ring plate 31;
two hollow side posts (C2) extending integrally and upwardly from the ring plate 31 and located on two sides of the central post (C1);
three thin annular ribs (R1) formed on a top surface of the ring plate 31 and disposed around the central post (C1) ;
a thick annular rib (R2) formed on an outer peripheral portion of the top surface of the ring plate 31 and disposed around the thin annular ribs (R1);
a central hole 32 formed through the ring plate 31 and the central post (C1) and in fluid communication with the central holes 111 in the inner supporting members 11;
two side holes 33, 34, each of which is formed through the ring plate 31 and the corresponding side post (C2) and is in fluid communication with the stirrer-receiving spaces 13 in the support units 1;
a circumferential row of vertical peripheral holes 35 formed through the thick annular rib (R2) and shaped as counterbores; and
a plurality of radial ribs 36 formed on the top surface of the ring plate 31 so as to connect with the thin and thick annular ribs (R1, R2) and the side posts (C2).

Each of the radial ribs 36 has a height that increases gradually from a radial outer end to a radial inner end, as shown in Fig. 4. As such, the top cover 3 has an upwardly and gradually converging top surface.

The bottom cover 4 is disposed on the bottom surfaces of the inner and outer supporting members 11, 12 of the lowermost support unit 1. The bottom cover 4 has a ring plate 41, a central hole 42, two side holes 43, 44, a circumferential row of peripheral holes 45, and a downwardly and gradually converging bottom surface. As the structures of the top and bottom covers 3, 4 are symmetrical with respect to the support units, the bottom cover 4 will not described in greater detail herein.

A plurality of lock bolt and nut units extend respectively into the peripheral holes 35, 45 in the top and bottom covers 3, 4 so as to connect the top and bottom covers 3, 4 removably with the support units 1. Each of the lock bolt and nut units includes a plurality of bolts 7 (only one is shown in Fig. 2) disposed around the outer supporting members 12, and a plurality of nuts 71 (only one is shown in Fig. 2) engaging the bolts 7, respectively. Each adjacent pair of the top cover 3, the support units 1, and the bottom cover 4 define a filter-receiving space 6 (see Fig. 4) that is formed therebetween and that is in fluid communication with the central holes 111 in the inner supporting members 11 and the side holes 33, 34, 43, 44 in the top and bottom covers 3, 4. The filter-receiving spaces 6 are communicated with the central holes 111 in the inner supporting members 11 through the notches 114 in the inner supporting members 11. As such, dirty water can flow from the side holes 33, 34, 43, 44 in the top and bottom covers 3, 4 into the central holes 111 in the inner supporting members 11 through the filter-receiving spaces 6.

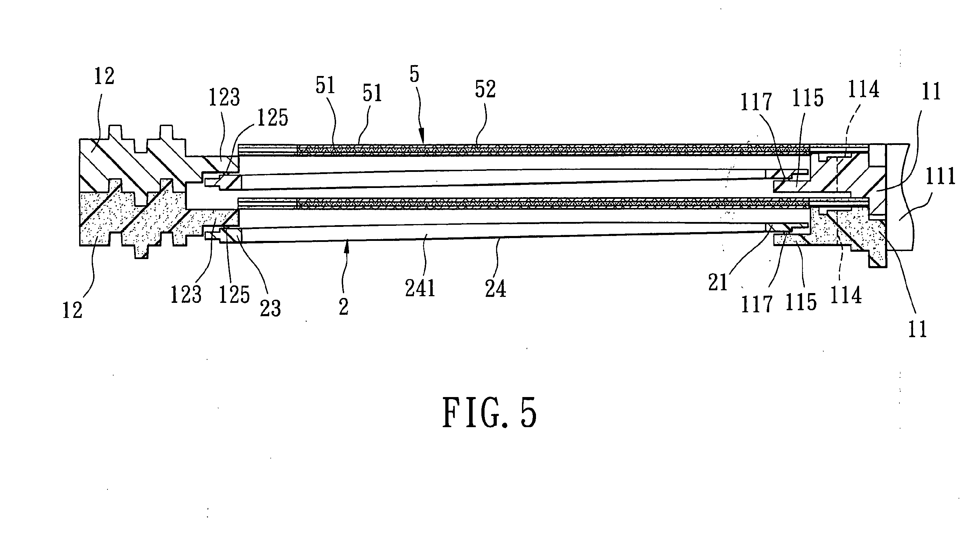

The filter units 5 are received respectively and fittingly within the filter-receiving spaces 6 in a known manner so as to filter the dirty water when the dirty water flows through the filter-receiving spaces 6, thereby permitting filtered water to exit from the laminated modular water filter through the central holes 32, 42 in the top and bottom covers 3, 4, as shown in Figs. 4 and 5. Each of the filter units 5 includes two soft filtering films 51 (see Fig. 5), and a hard net 52 (see Fig. 5) sandwiched between the filtering films 51 so as to define a water passage that is disposed between the filtering films 51 and that is in fluid communication with the central holes 111 in the inner supporting members 11 through the notches 114 in the inner supporting members 11.

During use, dirty water can be forced into a selected one or selected ones of the side holes 33, 34, 43, 44 in the top and bottom covers 3, 4, non-selected ones of the side holes 33, 34, 43, 44 being closed in advance. The dirty water flows into the filter-receiving spaces 6 and the filter units 5 so as to form filtered water that flows into the central holes 111 in the inner supporting members 11 and that exits from the laminated modular water filter through the central hole 32 in the top cover 3 and/or the central hole 42 in the bottom cover 4. For example, referring to Fig. 4, dirty water is forced into the side holes 33, 34 in the top cover 3 so as to flow into the central holes 111 in the inner supporting members 11 through the filter units 5.

The laminated modular water filter of this invention has the following advantages:
(1) Since each of the support units 1 is comprised of one of the inner supporting members 11 and one of the outer supporting members 12, and since the top and bottom covers 3, 4 are not solid bodies, total weight of the laminated modular water filter of this invention is reduced significantly.
(2) Contact areas between the stirring members 2 and the projecting grains 117, 125 of the inner and outer supporting members 11, 12 are relatively small so as to permit smooth rotation of the stirring members 2. As such, the stirring members 2 can remove solid particles effectively from the filtering films 51.
(3) As each adjacent pair of the support units 1 are made respectively from soft and hard materials, a liquid-tight seal can be established therebetween. As such, there is no need to employ seal rings in the laminated modular water filter of this invention so as to increase anti-leakage effect thereof.
(4) The thin and thick annular ribs (R1, R2) and the radial rib 36 can reinforce the top and bottom covers 3, 4 so as to prevent deformation of the same.

## Claims

1. A laminated modular water filter **characterized by**:
a plurality of superposed support units (1), each of which includes an annular inner supporting member (11) and an annular outer supporting member (12) that is disposed around the inner supporting member (11) to define an annular stirrer-receiving space (13) therebetween, each adjacent pair of the inner supporting members (11) being interconnected such that a liquid-tight seal is established therebetween, each adj acent pair of the outer supporting members (12) being interconnected such that a liquid-tight seal is established therebetween, each of the inner supporting members (11) having a central hole (111), and an outer periphery that is formed with a fixed guide rail unit therealong, each of the outer supporting members (12) having an inner periphery that is formed with a fixed guide rail unit therealong, the inner supporting members (11) being arranged in a vertical row, the outer supporting members (12) being arranged in a vertical row;
a plurality of stirring members (2) connected respectively and rotatably to the superposed support units (1), each of the stirring members (2) including an inner ring (21) defining a central hole (22) therein and rotatable along the guide rail unit of a corresponding one of the inner supporting members (11) , an outer ring (23) disposed around and spaced apart from the inner ring (21) and rotatable along the guide rail unit of a corresponding one of the outer supporting members (12), and a plurality of ribs (24), each of which has an inner end formed integrally with the inner ring (21) , and an outer end formed integrally with the outer ring (23), the central holes (22) in the inner rings (21) of the stirring members (2) being in fluid communication with the central holes (111) in the inner supporting members (11) in the superposed support units (1) ;
a top cover (3) disposed on top surfaces of the inner and outer supporting members (11, 12) of an uppermost one of the superposed support units (1) and connected removably with the superposed support units (1), the top cover (3) having a central hole (32) in fluid communication with the central holes (111) in the inner supporting members (11) of the support units (1), and at least one side hole (33, 34) that is formed through the top cover (3), that is in fluid communication with the annular stirrer-receiving spaces(13) in the superposed support units (1), and that permits introduction of dirty water therethrough;
a bottom cover (4) disposed on bottom surfaces of the inner and outer supporting members (11, 12) of a lowermost one of the superposed support units (1) and connected removably to the superposed support units (1), the bottom cover (4) having a central hole (42) in fluid communication with the central holes (111) in the inner supporting members (11) of the superposed support units (1) , and at least one side hole (43, 44) that is formed through the bottom cover (4), that is in fluid communication with the annular stirrer-receiving spaces (13) in the superposed support units (1), and that permits introduction of the dirty water therethrough;
each adjacent pair of the top cover (3), the superposed support units (1), and the bottom cover (4) defining a filter-receiving space (6) that is formed therebetween and that is in fluid communication with the central holes (111) in the inner supporting members (11) and the side holes (33, 34, 43, 44) in the top and bottom covers (3, 4) such that the dirty water can flow from the side holes (33, 34, 43, 44) in the top and bottom covers (3, 4) into the central holes (111) in the inner supporting members (11) through the filter-receiving spaces (6); and
a plurality of filter units (5) received respectively and fittingly within the filter-receiving spaces (6) so as to filter the dirty water when the dirty water flows through the filter-receiving spaces (6), thereby permitting filtered water to exit from the laminated modular water filter through the central holes (32, 42) in the top and bottom covers (3, 4).

2. The laminated modular water filter as claimed in Claim 1, **characterized in that** each of the ribs (24) of the stirring members (2) is curved, and has two inclined side surfaces (241) so as to provide an enhanced stirring effect.

3. The laminated modular water filter as claimed in Claim 1, **characterized in that** each of the guide rail units of the inner and outer supporting members (11, 12) includes a plurality of alternately arranged L-shaped first and second guiding blocks (115, 115', 123, 123') extending integrally and radially therefrom, each of the first guiding blocks (115, 123) having a vertical plate portion (116V, 124V) formed integrally with a corresponding one of the inner and outer supporting members (11, 12) of the superposed support units (1), and a horizontal plate portion (116H, 124H) extending integrally and radially from an upper end of the vertical plate portion (116V, 124V) and having a bottom surface that is formed with an integral projecting grain (117, 125) for contact with a corresponding one of the stirring members (2) , each of the second guiding blocks (115' , 123') having a vertical plate portion (116V, 124V) formed integrally with the corresponding one of the inner and outer supporting members (11, 12) of the superposed support units (1), and a horizontal plate portion (116H, 124H) extending integrally and radially from a lower end of the vertical plate portion (116V, 124V) of a corresponding one of the second guiding blocks (115', 123') and having a top surface that is formed with an integral projecting grain (117, 125) for contact with the corresponding one of the stirring members (2), the vertical plate portions (116V, 124V) of the first and second guiding blocks (115, 115', 123, 123') of each of the guide rail units of the inner and outer supporting members (11, 12) of the superposed guide units being aligned with one another along a circumferential direction of a corresponding one of the guide rail units of the inner and outer supporting members (11, 12) of the support units (1) so as to confine the inner ring (21) of a corresponding one of the stirring members (2) between the projecting grains (117) of the horizontal plate portions (116H) of the first and second guiding blocks (115, 115') of the corresponding one of the inner supporting members (11) and so as to confine the outer ring (23) of the corresponding one of the stirring members (2) between the projecting grains (125) of the horizontal plate portions (124H) of the first and second guiding blocks (123, 123') of the corresponding one of the outer supporting members (12).

4. The laminated modular water filter as claimed in Claim 1, **characterized in that** the top cover (3) has an upwardly and gradually converging top surface, and an outer peripheral portion that is formed with a plurality of peripheral holes (35) formed therethrough, the bottom cover (4) having a downwardly and gradually converging bottom surface, and an outer peripheral portion that is formed with a plurality of peripheral holes (45) formed therethrough, the laminated modular water filter further comprising a plurality of lock bolt and nut units that extend respectively into the peripheral holes (35, 45) in each of the top and bottom covers (3, 4) so as to connect the top and bottom covers (3, 4) removably with the superposed support units (1) .

5. The laminated modular water filter as claimed in Claim 1, **characterized in that** the inner and outer supporting members (11, 12) of one of each adjacent pair of the superposed support units (1) are made of a soft material, and the inner and outer supporting members (11, 12) of the other one of each adjacent pair of the superposed support units (1) are made of a hard material so as to establish a liquid-tight seal between each adjacent pair of the inner supporting members (11) and between each adj acent pair of the outer supporting members (12) .

6. The laminated modular water filter as claimed in Claim 5, further **characterized in that** the soft material is polyethylene, and the hard material is propylene-butadiene-styrene co-polymer.

7. The laminated modular water filter as claimed in Claim 1, **characterized in that** each of the inner supporting members (11) has a circumferential row of grooves (112) formed in one side surface thereof, and a circumferential row of tongues (113) formed on the other side surface thereof, the tongues (113) of each of the inner supporting members (11) engaging respectively and fittingly the grooves (112) in an adjacent one of the inner supporting members (11) so that the inner supporting members (11) are arranged in vertical row.

8. The laminated modular water filter as claimed in Claim 1, **characterized in that** each of the outer supporting members (12) has an annular groove (121) formed in one side surface thereof, and an annular rib (122) formed on the other side surface thereof, the annular rib (122) of each of the outer supporting members (12) engaging fittingly the annular groove (121) in an adjacent one of the outer supporting members (12) so that the outer supporting members (12) are arranged in a vertical row.
